# EUROPÄISCHE PATENTSCHRIFT

(11) **EP 0 900 169 B1**
(45) Veröffentlichungstag und Bekanntmachung des Hinweises auf die Patenterteilung: **27.12.2000**
(21) Anmeldenummer: 98900261.3
(22) Anmeldetag: 21.01.1998
(51) Int. Cl.: B65G 25/06, B65G 17/08, B65G 1/04

(54) **FÖRDERVORRICHTUNG FÜR REGALKANÄLE VON REGALLAGERANLAGEN**
CONVEYOR DEVICE FOR SHELF CHANNELS IN SHELF-STORAGE SYSTEMS
DISPOSITIF CONVOYEUR POUR CANAUX DE RAYONNAGES D'INSTALLATIONS DE STOCKAGE A RAYONNAGES

(30) Priorität: 03.03.1997 CH 50197
(43) Veröffentlichungstag der Anmeldung: 10.03.1999
(73) Patentinhaber: Gilgen Fördersysteme AG, 3173 Oberwangen (CH)
(72) Erfinder: HALDIMANN, Hans-Rudolf, CH-6900 Lugano (CH)
(74) Vertreter: Rottmann, Maximilian R.
(86) Internationale Anmeldenummer: CH9800018
(87) Internationale Veröffentlichungsnummer: WO9839235

(56) Entgegenhaltungen:
- EP-A- 0 343 111
- DE-A- 3 442 111
- SU-A- 1 346 528

## Beschreibung

Die Erfindung betrifft eine Fördervorrichtung für Regalkanäle von Regallageranlagen nach dem Oberbegriff des Anspruchs 1.

Fördervorrichtungen für Regalkanäle von Regallageranlagen der hier zur Rede stehenden Art weisen üblicherweise zwei parallel angeordnete, umlaufende Fördermittel auf, mittels welchen die Güter in den einzelnen Regalkanälen ein- und auch wieder ausgelagert werden können. Die Fördermittel sind nicht angetrieben, sondern werden von einem Entnahmefahrzeug, beispielsweise einem Gabelstapler, beim Ein- und Auslagern der Gütern bewegt. Üblicherweise ist die Hälfte des Fördermittels als Rollen- oder Tragrollenkette ausgebildet, währenddem die andere Hälfte aus einem Seil besteht, welches die Kette zu einem endlos umlaufenden Fördermittel verbindet. Eine derartige Ausgestaltung senkt gegenüber vollumfänglich als Kette ausgebildeten Fördermitteln die Kosten und spart Gewicht.

Da die beiden Fördermittel eines Regalkanales nicht miteinander gekoppelt sind, besteht die Gefahr, dass sie sich relativ zueinander verschieben. Eine Ursache für diese Verschiebung kann darin bestehen, dass die erste Palette beim Einlagern schräg und/oder versetzt auf dem jewciliqen Fördermittel aufgesetzt wird, bzw. dass die letzte Palette schräg oder versetzt entnommen wird. Derartige Fehler können sich mit der Zeit zu einem grossen, relativen Versatz zwischen den beiden Fördermitteln addieren, was letztlich dazu führen kann, dass eingelagerte Güter nicht mehr nur auf der Kette sondern einseitig auf dem Seil aufliegen. Es versteht sich, dass dies unerwünscht ist und zu Betriebsstörungen und Defekten führen kann.

Aus der DE 34 42 111 ist eine Vorrichtung zur Positionierung und Handhabung von Rollpaletten bekannt. Die Teil eines Regalförderzeuges bildende Vorrichtung weist zwei Kettenförderer und einen dazwischen angeordneten Teleskopschlitten auf. Ein zur Aufnahme der Rolluntersätze vorgesehenes Regal ist mit zwei parallelen Laufschienen ausgerüstet, wobei jeder Laufschiene ein seitlich nach aussen verlegter Endanschlag zugeordnet ist. Zur Erzeugung einer Vorschubbewegung der Rollpaletten ist zwischen den Laufschienen eine Schubstange vorgesehen, die eine Vielzahl von Förderklinken aufweist. Die Schubstange kann zwischen einer gehobenen Schub- und einer abgesenkten Ruhestellung verfahren werden.

Es ist daher die Aufgabe der Erfindung, eine Fördervorrichtung für Regalkanäle von Regallageranlagen vorzuschlagen, welche mit der Entnahme der letzten Palette jeweils in einen definierten Ausgangszustand gebracht wird, in dem beide Fördermittel sowohl relativ zueinander wie auch absolut ausgerichtet sind.

Diese Aufgabe wird durch die im Kennzeichen des Anspruchs 1 aufgeführten Merkmale gelöst.

Bei der erfindungsgemäss ausgebildeten Fördervorrichtung wird das Fördermittel bei der Entnahme der letzten Palette bis an einen Endanschlag mitgezogen. Die letzte Palette kann danach relativ leicht von der Kette gezogen werden, da die letzten Kettenglieder mit einer glatten Oberfläche versehen sind. Nach der Entnahme der letzten Palette sind die beiden Fördermittel parallel ausgerichtet. Beim Einlagern einer neuen Palette rutscht diese über die mit einer glatten Oberfläche versehenen Kettenglieder hinweg bis sie sich an das im einschubseitigen Anfangsbereich des jeweiligen Fördermittels vorgesehene Mitnehmerorgan anlegt. Erst danach werden die beiden Fördermittel von der Palette mitgenommen.

Bevorzugte Ausführungsformen der im Anspruch 1 definierten Fördervorrichtung sind in den abhängigen Ansprüchen 2 bis 9 umschrieben.

Um sicherzustellen, dass die beiden Fördermittel durch die eingeschobene Palette solange nicht mitgenommen werden, bis sich die Palette am Mitnehmerorgan anlegt, wird in einem bevorzugten Ausführungsbeispiel ein Rastorgan vorgeschlagen, welches das jeweilige Fördermittel in der Endstellung arretiert.

Bei einem weiteren, bevorzugten Ausführungsbeispiel wird im entnahmeseitigen Endbereich eines jeden Regalkanals eine ortsfeste Rutsche vorgeschlagen, deren Oberseite zumindest teilweise oberhalb der mit einer glatten Oberfläche versehenen Kettenglieder verläuft. Vorzugsweise verläuft die Oberseite dieser Rutsche zumindest teilweise unterhalb der Mittel zur Sicherstellung einer kraftschlüssigen Verbindung zwischen den Ketten und den Paletten. Durch eine derartige Rutsche wird die Kette beim Entnehmen der letzten Palette von dieser solange mitgezogen, bis die letzten der mit einer kraftschlüssigen Verbindung versehenen Kettenglieder an der Umlenkung nach unten wegtauchen. Auf diese Weise werden die beiden Fördermittel bei der Entnahme der letzten Palette jeweils parallel ausgerichtet.

Eine derartige Rutsche hat den weiteren Vorteil, dass nach dem Entnehmen der jeweils vordersten Palette das in Bewegung gesetzte Fördermittel, bzw. die nunmehr vorderste Palette, auf der Rutsche auslaufen kann, ohne dass die Gefahr besteht, dass eingelagerte Güter über das Regalende hinaus bewegt werden.

Nachfolgend soll ein Ausführungsbeispiel der Erfindung anhand von Zeichnungen näher erläutert werden. In diesen Zeichnungen zeigt:
- Fig. 1a: ein schematisch dargestelltes Fördermittel eines Regalkanals im Längsschnitt;
- Fig. 1b: einen Ausschnitt des Fördermittels gemäss Fig. 1 in vergrösserter Darstellung bei der Entnahme der letzten Palette;
- Fig. 2a: eine Detailansicht eines ersten Ausführungsbeispiels des Fördermittels im Bereich der entnahmeseitigen Umlenkung, und
- Fig. 2b: eine Detailansicht eines zweiten Ausführungsbeispiels des Fördermittels im Bereich der entnahmeseitigen Umlenkung.

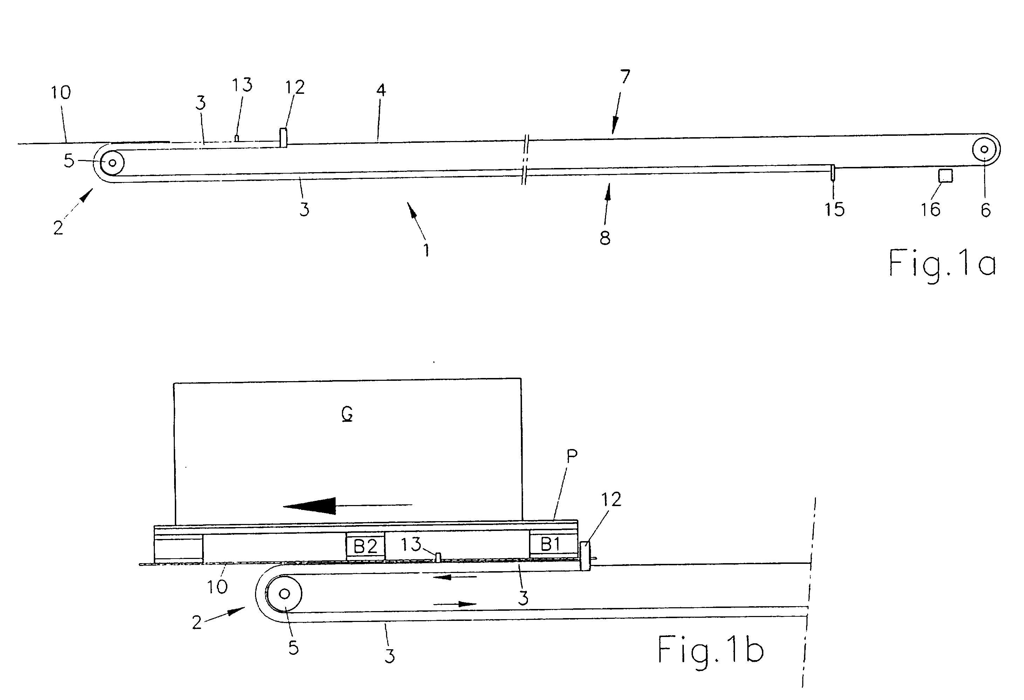

Fig. 1a zeigt einen Längsschnitt durch ein schematisch dargestelltes Fördermittel 2 einer Fördervorrichtung 1, welche in einem Regalkanal einer Regallageranlage zum Einsatz kommt.

Um Güter in einem Regalkanal hintereinander ein- und auslagern zu können, ist jeder Regalkanal mit einer Fördervorrichtung 1 versehen, welche im wesentlichen aus zwei parallel angeordneten, umlaufenden Fördermitteln 2 besteht. Als eigentliches Tragelement dieses Fördermittels 2 ist eine, hier schematisch dargestellte, Tragrollenkette 3 vorgesehen. Damit Kosten und Gewicht optimiert werden können, ist das Fördermittel 2 nur ca. zur Hälfte als Kette 3 ausgebildet. Die andere Hälfte wird durch ein Seil 4 gebildet, das an den beiden Endgliedern der Kette 3 befestigt ist. Zum Umlenken des Fördermittels 2 ist eine vordere, der Entnahmeseite des Regalkanals zugewandte Umlenkung 5 sowie eine hintere, der Entnahmeseite des Regalkanals abgewandte Umlenkung 6 vorgesehen. Durch diese beiden Umlenkungen 5, 6 wird das Fördermittel 3 in ein oberes und ein unteres Trum 7, 8 unterteilt. Als Laufbahn für das obere Trum 7 der Kette 3 ist eine Schiene vorgesehen, welche aus dieser Darstellung nicht ersichtlich ist. Das untere Trum 8 der Kette 3 wird auf der Unterseite der Schiene von nicht näher dargestellten Mitteln abgestützt. Im Bereich der einschubseitigen Umlenkung 5 ist eine Rutsche 10 vorgesehen, die für das Ein- und Auslagern von Gütern wichtig ist.

Am einschubseitigen Anfang ist die Kette 3 mit einem als Anschlag dienenden Winkelelement 12 versehen, an welches sich die erste Palette beim Einlagern anlegt, wodurch eine kraftschlüssige Verbindung zwischen Palette und Fördermittel 2 sichergestellt wird.

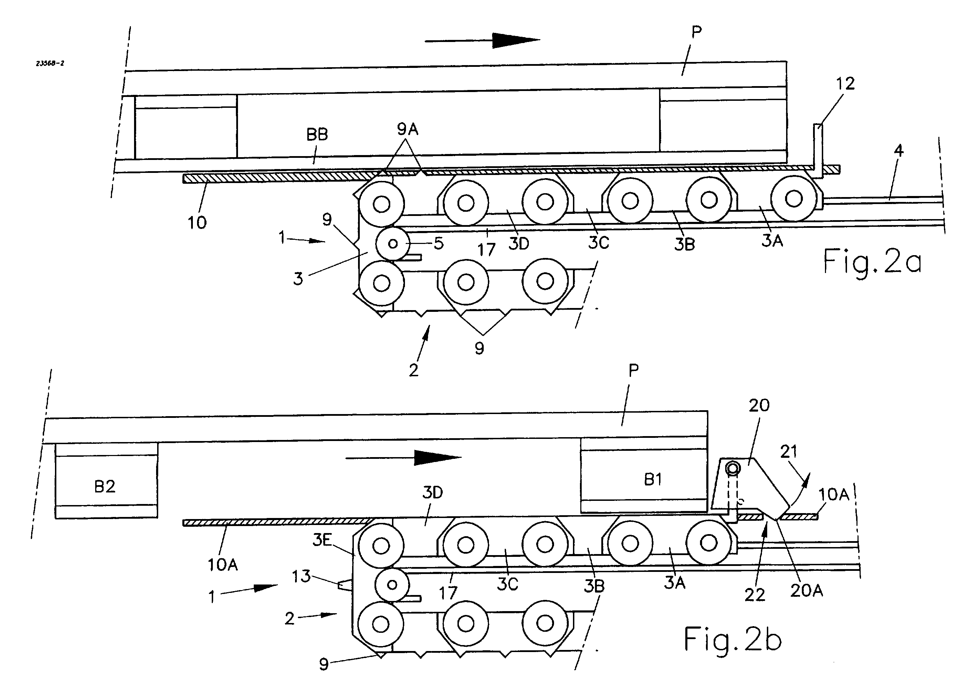

Einige Kettenglieder vor dem Winkelelement 12 ist ein Mitnehmerorgan 13 vorgesehen, welches als Erhebung ausgebildet ist und bei der Entnahme der letzten Palette eine kraftschlüssige Verbindung zwischen Palette und Kette sicherstellt. Um eine kraftschlüssige Verbindung zwischen sämtlichen, auf der Kette 3 aufgenommenen Paletten und dem Fördermittel 2 sicherzustellen, sind die einzelnen Kettenglieder auf der Oberseite mit spitzen Erhebungen versehen. Allerdings weisen diejenigen Kettenglieder, die sich zwischen dem Mitnehmerorgan 13 und dem Anschlag 12 befinden, eine glatte Oberfläche auf. Die Ausbildung sowohl des Winkels 12 wie auch des Mitnehmerorgans 13 wird anschliessend anhand der Fig. 2a und 2b noch näher erläutert. Die im Bereich der einschubseitigen Umlenkung 5 angeordnete Rutsche 10 umfasst das jeweilige Fördermittel 2 vorzugsweise auf beiden Seiten.

Im einschubseitigen Endbereich ist das Fördermittel mit einem Endanschlag 15 versehen, der mit einem ortsfest angeordneten Puffer 16 zusammenzuarbeiten bestimmt ist und den Verschiebeweg der Kette 3 in Entnahmerichtung begrenzt.

Fig. 1b zeigt in vergrosserter Darstellung den Bereich der entnahmeseitigen Umlenkung des Fördermittels 2 gemäss Fig. 1, wobei das Fördermittel 2 wiederum schematisch dargestellt ist. Anhand dieser Zeichnung soll die Wirkungsweise der Fördervorrichtung bei der Entnahme der letzten Palette näher erläutert werden, wobei die Fördervorrichtung im vorliegenden Beispiel zur Verwendung von Paletten vorgesehene ist, deren Bodenbretter in Längsrichtung des Fördermittels nicht miteinander verbunden sind.

Bei der Entnahme der letzten Palette wird das Fördermittel 2 von der Palette solange mitgezogen, bis deren mittleres Bodenbrett B2 die Kette 3 verlassen hat und auf der Rutsche 10 aufzuliegen kommt. Da die letzten, sich zwischen dem Mitnehmerorgan 13 und dem Anschlag 12 befindlichen Glieder der Kette 3 mit einer glatten Oberfläche versehen sind, wird die kraftschlüssige Verbindung zwischen Palette P und Kette 3 weitgehend aufgehoben, wenn nur noch das hinterste Bodenbrett B1 auf der Kette 3 aufliegt. Dadurch kann die Palette P auf der Kette 3 nach vorne rutschen. Sobald sich jedoch das hinterste Bodenbrett B1 an das Mitnehmerorgan 13 anlegt, ist die Kraftschlussverbindung wiederhergestellt und die Kette 3 wird wieder mitgezogen. Beim Weiterziehen der Kette 3 taucht das Mitnehmerorgan an der entnahmeseitigen Umlenkung 5 ab, wodurch die kraftschlüssige Verbindung zwischen Palette P und Kette 3 definitiv aufgehoben wird. Durch die kinetische Energie läuft die Kette 3 jedoch noch weiter, bis sich der Endanschlag 15 am Puffer 16 anlegt (Fig. 1a).

In der Fig. 2a ist eine bevorzugte Ausführungsform des Fördermittels im Bereich der entnahmeseitigen Umlenkung in einer nochmals vergrosserten Darstellung ersichtlich, wobei sich das eingezeichnete Fördermittel kurz vor der entnahmeseitigen Endstellung befindet.

Die dargestellte Fördervorrichtung 1 eignet sich insbesondere für Paletten P mit durchgehenden Bodenbrettern BB. Aus dieser Darstellung ist ersichtlich, dass das einschubseitig erste Kettenglied 3A mit einem Winkel 12 versehen ist, dass die letzten vier Kettenglieder 3A, 3B, 3C, 3D mit einer glatten Oberfläche versehen sind und dass die übrigen Kettenglieder mit spitzen Erhebungen 9 zur Sicherstellung einer kraftschlüssigen Verbindung versehen sind. Die Oberfläche der im Bereich der vorderen Umlenkung 5 vorgesehenen Rutsche 10 verläuft um wenige Millimeter über der Oberseite der Kette 3 bzw. der mit einer glatten Oberfläche versehenen Kettenglieder 3A, 3B, 3C, 3D. Andererseits überragen die spitzen Erhebungen 9A die Oberfläche der Rutsche 10. Diese Ausbildung bewirkt, dass die Kette 3 bei der Entnahme der Palette P solange mitgezogen wird, bis die letzten, mit spitzen Erhebungen versehenen Kettenglieder an der Umlenkung 5 nach unten weggetaucht sind. Die Kette 3 läuft dann, getrieben von der kinetischen Energie, bis an ihren Endanschlag weiter.

Beim Einschieben der ersten Palette wird durch die Rutsche 10 sichergestellt, dass die Kette 3 solange nicht mitgenommen wird, bis sich die Palette P am Winkel 12 anlegt.

Anstelle der hier dargestellten, horizontal verlaufenden Rutsche 10 kann natürlich auch eine Rutsche 10 vorgesehen werden, die schräg verläuft oder im Anfangsbereich mit einer Rampe versehen ist.

Fig. 2b zeit eine alternative Ausführungsform zu der in Fig. 2a dargestellten Fördervorrichtung. Im vorliegenden Beispiel verläuft die Oberseite der Rutsche 10A in etwa auf gleicher Höhe wie die Oberseite der letzten, mit einer glatten Oberfläche versehenen Kettenglieder 3A, 3B, 3C, 3D. Um das Fördermittel 2 in der Endstellung zu arretieren, ist eine Klinke 20 vorgesehen, die am ersten Kettenglied 3A drehbar abgestützt ist. Wenn sich die Kette 3 in der hier dargestellten Endstellung befindet, greift die Klinke 20 mit ihrer Rastnase 20A in eine in die Rutsche 10A eingelassene Ausnehmung 22 ein. Durch diese Klinke 20 wird sichergestellt, dass die erste Palette P beim Einlagern auf der Rutsche 10A bzw. auf deren glatten Oberfläche über die Kettenglieder hinweggleitet ohne dabei die Kette 3 mitzunehmen.

Erst wenn sich die Palette P mit ihrer Stirnseite an der Klinke 20 anlegt, wird letztere, durch ihre schräge, der Palette P zugewandte Stirnseite, um die Drehachse verdreht, wodurch die Rastnase 20A in Richtung des Pfeiles 21 angehoben wird und aus der Ausnehmung 22 ausklinkt. Danach wird die Kette 3 von der Palette P mitgenommen, wobei die Klinke 20 nunmehr als Mitnehmerorgan wirkt.

Um auch bei der Entnahme der letzten Palette den Kraftschluss zwischen Palette und Kette 3 sicherzustellen, nachdem das mittlere Bodenbrett B2 die Kette 3 verlassen hat, ist das sich an die mit einer glatten Oberfläche versehenen Kettenglieder anschliessende Kettenglied mit einem Mitnehmerorgan 13 versehen.

## Patentansprüche

1. Fördervorrichtung (1) für Regalkanäle von Regallageranlagen, mit zwei parallel angeordneten, umlaufenden Fördermitteln (2) zur Aufnahme von einzulagernden Gütern (G), welche auf Paletten (P) aufgenommen sind, wobei die Fördermittel (2) teilweise als Rollen- oder Tragrollenketten (3) ausgebildet sind, deren Enden durch ein Seil (4) miteinander verbunden sind, und wobei die beiden Ketten (3) auf der Oberseite mit Mitteln (9) zur Sicherstellung einer kraftschlüssigen Verbindung zwischen dem Fördermittel (2) und den Paletten (P) versehen sind, und wobei pro Fördermittel (2) ein Endanschlag (15,16) vorgesehen ist, **dadurch gekennzeichnet,** dass im entnahmeseitigen Endbereich der jeweiligen Kette (3) mehrere Kettenglieder (3A, 3B, 3C, 3D) mit einer glatten Oberfläche versehen sind, das der Endanschlag (15,16) den Verschiebeweg der jeweiligen Kette (3) in Entnahmerichtung begrenzt und dass beide Fördermittel (2) im Bereich ihres einschubseitigen Anfangsbereichs mit je einem Mitnehmerorgan (12, 19) versehen sind, welches in Einschubrichtung eine kraft- und/oder formschlüssige Verbindung zwischen dem Fördermittel (2) und der ersten, einzulagernden Palette (P) sicherstellt.

2. Fördervorrichtung (1) nach Anspruch 1, dadurch gekennzeichnet, dass pro Fördermittel (2) je ein Rastorgan (20, 20A) vorgesehen ist, welches das jeweilige Fördermittel (2) in der Anfangsstellung arretiert.

3. Fördervorrichtung (1) nach Anspruch 2, dadurch gekennzeichnet, dass als Rastorgan eine drehbar gelagerte Klinke (20) vorgesehen ist, welche mit einem Rastorgan (20A) versehen ist, das mit einer in ein Tragelement eingelassenen Vertiefung oder Ausnehmung (22) zusammenzuarbeiten bestimmt ist.

4. Fördervorrichtung (1) nach Anspruch 3, dadurch gekennzeichnet, dass die Klinke (20) in Entnahmerichtung am letzten Kettenglied (3A) angeordnet ist, wobei die Klinke (20) das letzte Kettenlied (3A) derart überragt, dass sich die erste, einzulagernde Palette (P) beim Einschieben an der Klinke (20) anlegt und letztere verdreht, so dass deren Rastorgan (20A) aus der Vertiefung (22) ausrastet und das Fördermittel (2) verschiebbar ist.

5. Fördervorrichtung (1) nach einem der vorhergehenden Ansprüche, dadurch gekennzeichnet, dass das sich in Entnahmerichtung an das letzte mit einer glatten Oberfläche versehene Kettenglied (3D) anschliessende Kettenglied (3E) mit einer Erhebung (13) versehen ist, zur Sicherstellung einer kraftschlüssigen Verbindung zwischen Palette (P) und Fördermittel (2).

6. Fördervorrichtung (1) nach einem der vorhergehenden Ansprüche, dadurch gekennzeichnet, dass im entnahmeseitigen Endbereich eines jeden Regalkanals eine ortsfeste Rutsche (10) vorgesehen ist, deren Oberseite zumindest teilweise oberhalb der mit einer glatten Oberfläche versehenen Kettenglieder (3A, 3B, 3C, 3D) verläuft.

7. Fördervorrichtung (1) nach Anspruch 6, dadurch gekennzeichnet, dass die Oberseite der ortsfesten Rutsche (10) zumindest teilweise unterhalb der Oberseite der Mittel (9A) zur Sicherstellung einer kraftschlüssigen Verbindung zwischen der Kette (3) und der Palette (P) verläuft.

8. Fördervorrichtung (1) nach einem der vorhergehenden Ansprüche, dadurch gekennzeichnet, dass die Mittel zur Sicherstellung einer kraftschlüssigen Verbindung zwischen den Kette (3) und der Palette (P) als spitze Erhebungen (9, 9A) ausgebildet sind.

9. Fördervorrichtung (1) nach einem der vorhergehenden Ansprüche, dadurch gekennzeichnet, dass in Einschubrichtung gesehen, zumindest die ersten vier Kettenglieder (3A, 3B, 3C, 3D) mit einer glatten Oberfläche versehen sind.

## Claims

1. Conveying apparatus (1) for rack channels of rack storage systems, having two parallel, circulating conveying means (2) for accommodating goods (G) which are to be stored and are accommodated on pallets (P), the conveying means (2) being designed, in part, as roller or carrying roller chains (3), of which the ends are connected to one another by a cable (4), and the two chains (3) being provided, on the top side, with means (9) for ensuring a force-fitting connection between the conveying means (2) and the pallets (P), and one end stop (15, 16) being provided for each conveying means (2), characterized in that, in the removal-side end region of the respective chain (3), a plurality of chain links (3A, 3B, 3C, 3D) are provided with a smooth surface, in that the end stop (15, 16) bounds the displacement path of the respective chain (3) in the removal direction, and in that, in the region of their push-in-side starting region, the two conveying means (2) are provided with in each case one carry-along element (12, 19) which ensures, in the push-in direction, a force-fitting and/or form-fitting connection between the conveying means (2) and the first pallet (P) which is to be stored.

2. Conveying apparatus (1) according to Claim 1, characterized in that in each case one latching element (20, 20A) is provided for each conveying means (2), said latching element arresting the respective conveying means (2) in the starting position.

3. Conveying apparatus (1) according to Claim 2, characterized in that the latching element provided is a rotatably mounted catch (20) which is provided with a latching element (20A) which is intended for interacting with a depression or recess (22) provided in a carrying element.

4. Conveying apparatus (1) according to Claim 3, characterized in that the catch (20) is arranged on the last chain link (3A), as seen in the removal direction, the catch (20) projecting beyond the last chain link (3A) such that, as it is pushed in, the first pallet (P) which is to be stored is positioned against the catch (20) and rotates the latter, with the result that the latching element (20A) of said catch disengages from the depression (22) and the conveying means (2) can be displaced.

5. Conveying apparatus (1) according to one of the preceding claims, characterized in that the chain link (3E) adjoining the last chain link (3D) provided with a smooth surface, as seen in the removal direction, is provided with an elevation (13) in order to ensure a force-fitting connection between the pallet (P) and conveying means (2).

6. Conveying apparatus (1) according to one of the preceding claims, characterized in that provided in the removal-side end region of each rack channel is a stationary chute (10), of which the top side runs, at least in part, above the chain links (3A, 3B, 3C, 3D) provided with a smooth surface.

7. Conveying apparatus (1) according to Claim 6, characterized in that the top side of the stationary chute (10) runs, at least in part, beneath the top side of the means (9A) for ensuring a force-fitting connection between the chain (3) and the pallet (P).

8. Conveying apparatus (1) according to one of the preceding claims, characterized in that the means for ensuring a force-fitting connection between the chain (3) and the pallet (P) are designed as pointed elevations (9, 9A).

9. Conveying apparatus (1) according to one of the preceding claims, characterized in that at least the first four chain links (3A, 3B, 3C, 3D), as seen in the push-in direction, are provided with a smooth surface.

## Revendications

1. Dispositif de transfert (1) pour lignes de rayonnage d'installations de stockage à rayonnage, comprenant deux moyens de transfert (2) parallèles et en circuit fermé, destinés à recevoir des marchandises à stocker (G) qui sont disposées sur des palettes (P), les moyens de transfert (2) étant réalisés partiellement sous forme de chaînes à rouleaux ou chaînes à rouleaux porteurs (3) dont les extrémités sont reliées entre elles par un câble (4), tandis que les deux chaînes (3) sont pourvues, sur leurs faces supérieures, de moyens (9) permettant d'assurer une liaison par application de force entre le moyen de transfert (2) et les palettes (P) et que, par moyen de transfert (2), il est prévu une butée d'extrémité (15, 16), caractérisé en ce que, dans la zone d'extrémité côté extraction de chaque chaîne (3), plusieurs maillons de chaîne (3A, 3B, 3C, 3D) présentent une surface lisse, en ce que la butée d'extrémité (15, 16) limite dans la direction d'extraction la course de déplacement de la chaîne considérée (3) et en ce que, dans la zone de sa partie initiale côté introduction, chacun des deux moyens de transfert (2) est pourvu d'un organe d'entraînement (12, 19) respectif qui assure dans la direction d'introduction une liaison par application de force et/ou complémentarité de formes entre le moyen de transfert (2) et la première palette (P) à stocker.

2. Dispositif de transfert (1) suivant la revendication 1, caractérisé en ce que, par moyen de transfert (2), il est prévu un élément d'arrêt par enclenchement (20, 20A) qui immobilise dans la position initiale le moyen de transfert (2) considéré.

3. Dispositif de transfert (1) suivant la revendication 2, caractérisé en ce qu'en tant qu'élément d'arrêt par enclenchement, il est prévu un organe d'arrêt basculant (20) qui est pourvu d'un élément d'arrêt par enclenchement (20A) qui est destiné à coopérer avec une partie en retrait ou évidement (22) ménagé dans un élément porteur.

4. Dispositif de transfert (1) suivant la revendication 3, caractérisé en ce que l'organe d'arrêt basculant (20) est disposé, suivant la direction d'extraction, sur le dernier maillon de chaîne (3A), l'organe d'arrêt basculant (20) faisant saillie par rapport au dernier maillon de chaîne (3A) d'une manière telle que, lors de l'introduction, la première palette (P) à stocker prend appui sur l'organe d'arrêt basculant (20) et fait tourner ce dernier, de sorte que l'élément d'arrêt par enclenchement (20A) de celui-ci quitte son enclenchement vis-à-vis de la partie en retrait (22) et que le moyen de transfert (2) peut être déplacé.

5. Dispositif de transfert (1) suivant l'une des revendications précédentes, caractérisé en ce que le maillon de chaîne (3) qui suit dans la direction d'extraction le dernier maillon de chaîne (3D) présentant une surface lisse est pourvu d'une partie en surélévation (13) destinée à assurer une liaison par application de force entre la palette (P) et le moyen de transfert (2).

6. Dispositif de transfert (1) suivant l'une des revendications précédentes, caractérisé en ce qu'il est prévu, dans la zone d'extrémité côté extraction de chaque ligne de rayonnage, une glissière fixe (10) respective dont la face supérieure s'étend au moins partiellement au-dessus des maillons de chaîne (3A, 33, 3C, 3D) présentant une surface lisse.

7. Dispositif de transfert (1) suivant la revendication 6, caractérisé en ce que la face supérieure de la glissière fixe (10) s'étend au moins en partie au-dessous de la face supérieure des moyens (9A) servant à assurer une liaison par application de force entre la chaîne (3) et la palette (P).

8. Dispositif de transfert (1) suivant l'une des revendications précédentes, caractérisé en ce que les moyens servant à assurer une liaison par application de force entre la chaîne (3) et la palette (P) sont réalisés sous forme de parties en surélévation pointues (9, 9A).

9. Dispositif de transfert (1) suivant l'une des revendications précédentes, caractérisé en ce que, vu suivant la direction d'introduction, au moins les quatre premiers maillons de chaîne (3A, 3B, 3C, 3D) présentent une surface lisse.
